# EUROPÄISCHE PATENTSCHRIFT

(11) **EP 1 982 782 B1**
(45) Veröffentlichungstag und Bekanntmachung des Hinweises auf die Patenterteilung: **14.09.2011**
(21) Anmeldenummer: 08007207.7
(22) Anmeldetag: 11.04.2008
(51) Int. Cl.: B23B 31/20

(54) **Spannzange**
Collet
Pince de serrage

(30) Priorität: 12.04.2007 DE 102007017566; 03.09.2007 DE 102007041606
(43) Veröffentlichungstag der Anmeldung: 22.10.2008
(73) Patentinhaber: Reinauer, Josef, 72488 Sigmaringen/Laiz (DE)
(72) Erfinder: Reinauer, Josef, 72488 Sigmaringen/Laiz (DE)

(56) Entgegenhaltungen:
- EP-A- 0 258 771
- EP-A- 0 345 746
- EP-A- 1 607 159
- FR-A- 2 817 181
- US-A- 4 858 938

## Beschreibung

Die Erfindung betrifft eine aus einer Vielzahl von Spannsegmenten gebildete Spannzange zur Erzeugung einer Anpresskraft zwischen zwei zu kuppelnden, drehangetriebenen Teilen, im Besonderen einer Werkzeuggrundaufnahme, z.B. Werkzeugträger, und einer werkzeugmaschinenseitig vorgesehenen Aufnahme, z.B. Werkzeugmaschinenspindel.

Zwischen den in Bezug auf eine Drehachse rotationssymmetrisch angeordneten Spannsegmenten sind elastische Gelenke platziert, die die Spannsegmente in Umfangsrichtung positionieren und fest aber elastisch miteinander verbinden.

Eine gattungsgemäße Spannzange nach dem Oberbegriff von Anspruch 1 ist bekannt aus US 4 858 938.

Der Erfindung liegt die Aufgabe zugrunde, eine gattungsgemäße Spannzange so weiterzubilden, dass bei einfacher Bauweise selbst bei höchsten Drehzahlen eine zuverlässige Kupplung einer Werkzeuggrundaufnahme mit einer werkzeugmaschinenseitigen Aufnahme ermöglicht wird.

Diese Aufgabe wird gelöst durch eine Spannzange mit den Merkmalen des Anspruchs 1. Vorteilhafte Weiterbildungen sind Gegenstand abhängiger Ansprüche.

Die Spannzange besteht somit aus einer Vielzahl von Spannsegmenten und einer entsprechenden Vielzahl von die Spannsegmente verbindenden elastischen Gelenken aus Kunststoff, die die Spannsegmente ohne die Einwirkung einer Fremdkraft in einer Ausgangsstellung halten bzw. nach Wegfall einer Fremdkraft in die Ausgangsstellung zurück bringen. Die Gelenke bestehen aus einem elastischen Material und sind fest, d.h. form- und/oder kraftschlüssig, mit den Spannsegmenten verbunden. Sie sind erfindungsgemäß als längliche Befestigungsstege ausgebildet und in radialer Ausrichtung zwischen zwei Spannsegmenten form- und/oder kraftschlüssig eingesetzt. Die Spannsegmente werden damit in Umfangsrichtung der Spannzange in einem vorgegebenen Abstand zueinander angeordnet. Die Gelenke sind vorzugsweise in einem in Bezug auf die Drehachse werkzeugmaschinenseitigen, hinteren Endabschnitt der Spannzange zwischen den Spannsegmenten angeordnet. Neben den elastischen Gelenken sind zusätzliche Rückstellelemente, wie z. B. eine Wurmfeder, zur Erzeugung einer Rückstellkraft nicht erforderlich. Durch die geometrische Form der einzelnen Gelenke und deren Volumen lässt sich erreichen, dass die aus der Vielzahl von Spannsegmenten gebildete Spannzange ein möglichst großes Volumen einnimmt und letztlich im Falle einer Auslenkung der Spannsegmente aus der Ausgangsstellung eine hohe Rückstellkraft erreicht wird.

Die durch die Gelenke zu einer Einheit verbundenen, in dem einen der beiden zu kuppelnden Teile, z.B. Werkzeugmaschinenspindel, verankerten Spannsegmente definieren als Einheit an ihrem Außenumfang vorzugsweise einen Ringbund mit einer keilförmigen Ringfläche, die an einer entsprechenden Ringschulter in einem dem anderen der beiden zu kuppelnden Teile, z.B. Werkzeugträger, anliegen, wodurch das andere Teil, z.B. Werkzeugträger, fest mit dem einen Teil, z.B. Werkzeugmaschinenspindel, verspannt wird.

Die erfindungsgemäße Spannzange zeichnet sich durch eine einfache Bauweise, eine ausgezeichnete Rotationssymmetrie sowie eine daraus folgende wirtschaftliche Herstellbarkeit aus. Die Spannzange erhält durch die einzelnen, voneinander unabhängigen Gelenke ein höheres Volumen und kann dadurch eine höhere Spannkraft erzielen.

Die Gelenke die erfindungsgemäß in Form von Befestigungsstegen in radialer Ausrichtung zwischen den Spannsegmenten angeordnet sind, haben die Funktion einer Feder, die eine radiale Auslenkung der einzelnen Spannsegmente aus der Ausgangsstellung heraus gestattet und im ausgelenkten Zustand eine Rückstellkraft in Richtung Ausgangsstellung vorsieht. Je nach Materialstärke der Befestigungsstege, vergrößert oder verkleinert sich die bei Auslenkung aus der Ausgangsstellung auf die Spannsegmente wirkende Rückstellkraft.

Die Befestigungsstege sind vorzugsweise in einem hinteren Endabschnitt der Spannzange zwischen den Spannsegmenten angeordnet und haben im Querschnitt vorzugsweise im Wesentlichen die Form eines Rechtecks. Durch diese Form wird gewährleistet, dass selbst dünne Befestigungsstege zwischen den Spannsegmenten ein ausreichendes Volumen bilden, um die geforderte Rückstellkraft zu gewährleisten. Durch das Volumen der Befestigungsstege werden am hinteren Endabschnitt der Spannzange die Federeigenschaften an jedem einzelnen Spannelement erzeugt bzw. definiert. Die erfindungsgemäße Spannzange gewährleistet dadurch, dass die Spannsegmente nach radialer Auslenkung aus der Ausgangsstellung heraus bei Wegfall der die radiale Auslenkung bewirkenden Fremdkraft automatisch wieder in die Ausgangsstellung zurückspringen.

Im Folgenden wird die Erfindung an einem bevorzugten Ausführungsbeispiel mit Hilfe der Figuren näher erläutert.

Fig. 1a und Fig. 1b zeigen eine erfindungsgemäße Spannzange in einer Axialschnittansicht bzw. Seitenansicht.

Fig. 2 zeigt die erfindungsgemäße Spannzange in einer dreidimensionalen Ansicht in einem Lösezustand.

Fig. 3 zeigt ein Spannsegment in einer dreidimensionalen Ansicht.

Fig. 4 zeigt ein Gelenk in einer dreidimensionalen Ansicht.

Fig. 5 zeigt ein Gelenk in einer Draufsicht.

Fig. 6 und Fig. 7 zeigen die Spannzange eingesetzt in einer Kupplungsvorrichtung.

Nachfolgend wird ein bevorzugtes Ausführungsbeispiel einer erfindungsgemäßen Spannzange 1 unter Bezugnahme auf die Figuren beschrieben.

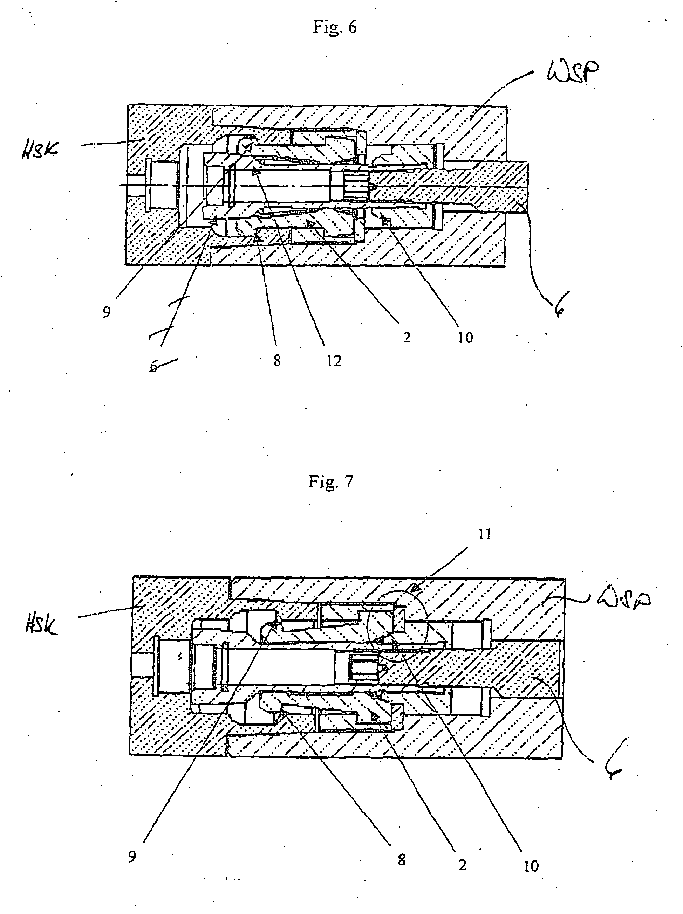

Fig. 6 und Fig. 7 zeigen die erfindungsgemäße Spannzange 1 in der bevorzugten Anwendung, in der die Spannzange 1 in herkömmlicher Weise fest in einer werkzeugmaschinenseitigen Aufnahme in Form einer Werkzeugmaschinenspindel WSP verankert ist und für die Ankopplung einer Werkzeuggrundaufnahme (Werkzeugträger) in Form eines Hohlschaftkegels HSK an die Werkzeugmaschinenspindel WSP ausgelegt ist. In Fig. 6 ist die Spannzange 1 in einem Spannzustand gezeigt, während Fig. 7 die Spannzange 1 in einem Lösezustand zeigt.

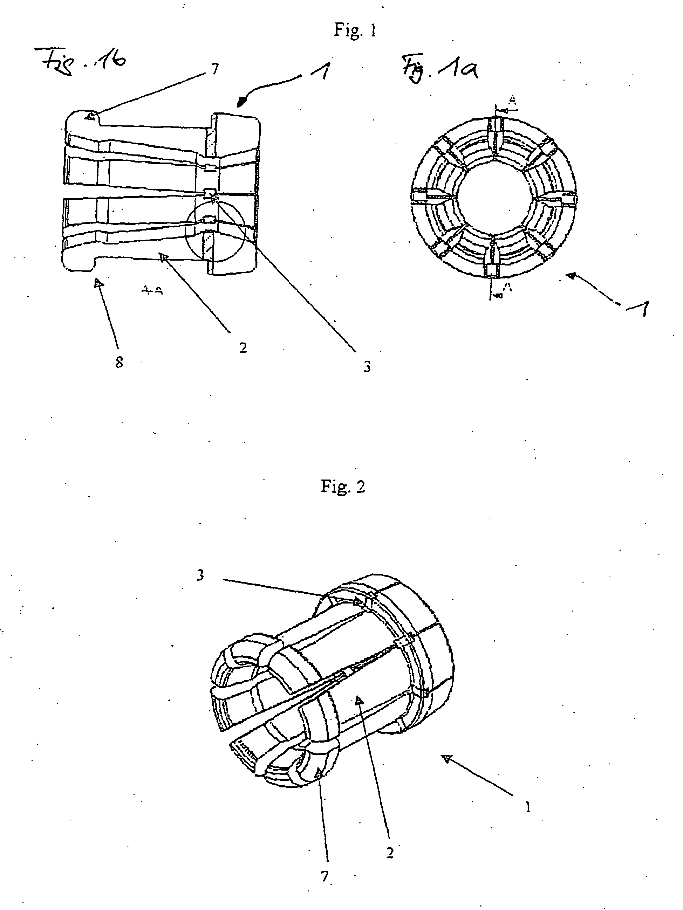

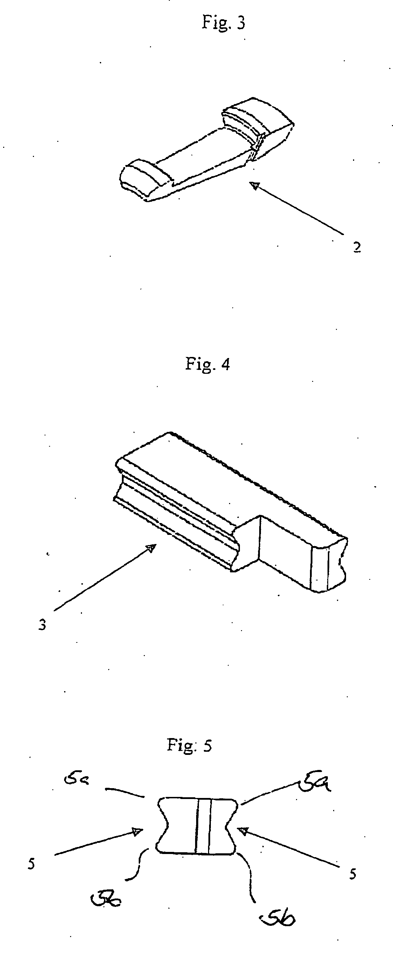

Fig. 1a und Fig. 1b zeigen die Spannzange 1 in einer Seitenansicht bzw. einer Axialschnittansicht. Fig. 2 zeigt die Spannzange 1 in einer dreidimensionalen Ansicht. Die Die Spannzange 1 ist aus einer Vielzahl von durch elastische Gelenke 3 miteinander verbundenen Spannsegmenten 2 gebildet. Die Vielzahl von Spannsegmenten 2 sind durch die Gelenke 3, die jeweils zwischen zwei in Umfangsrichtung benachbarten Spannsegmente 2 angeordnet sind, in Umfangsrichtung zu einer bezüglich der in Fig. 6 gestrichelt angedeuteten Drehachse rotationssymmetrischen Einheit verbunden. Fig. 3 zeigt eines der Spannsegmente 2 in dreidimensionaler Ansicht. Fig. 4 zeigt eines der Gelenke 3 in dreidimensionaler Ansicht. Aufgabe der Gelenke 3 ist es, jeweils die beiden benachbarten Spannsegmente 2 in Umfangsrichtung der Spannzange 1 in einem vorgegebenen Abstand äquidistant zu positionieren und elastisch miteinander zu verbinden. In dem in Fig. 1a, Fig. 1b und Fig. 2 gezeigten Zustand ist die Spannzange 1 aus der Vielzahl von Spannsegmenten 2 und Gelenken 3 zu einer einstückig handhabbaren Einheit zusammengesetzt. Der in Fig. 1a, Fig. 1b und Fig. 2 dargestellte Zustand entspricht dem in Fig. 7 dargestellten Lösezustand der Spannzange 1. Bei Auslenkung der Spannsegmente 2 aus dem Ausgangszustand radial nach außen in die in Fig. 6 dargestellte Spannstellung wird durch die elastischen Gelenke 3 eine in Richtung Spannzustand wirkende Rückstellkraft erzeugt.

An dem in Fig. 1b linken, dem Hohlschaftkegel HSK zugewandten (vorderen) Endabschnitt weist die Spannzange 1 einen durch die Vielzahl von Spannsegmenten 2 definierten Ringbund 7 auf, der über eine im Axialschnitt keilförmige Ringfläche 8 in Anlage an einer im Hohlschaftkegel HSK ausgebildeten Ringschulter 9 bringbar ist. In dem in Fig. 6 gezeigten Spannzustand liegt die am Ringbund 7 definierte Ringfläche 8 an der Ringschulter 9 des Hohlschaftkegels HSK an, wodurch der Hohlschaftkegel HSK fest an die Werkzeugmaschinenspindel WSP angekoppelt ist, während in dem in Fig. 7 gezeigten Lösezustand der Ringbund 7 außer Eingriff steht mit der Ringschulter 8 des Hohlschaftkegels HSK.

Fig. 2 zeigt in dreidimensionaler Ansicht die Spannzange 1 in einem Lösezustand. Die Gelenke 3 befinden sich in dem in Fig. 2 rechten, hinteren Endabschnitt der Spannzange 1, der wie aus Fig. 6 und 7 ersichtlich in der Werkzeugmaschinenspindel WSP verankert ist.

Fig. 4 und Fig. 5 zeigen in vergrößerter Darstellung eines der Gelenke 3, deren elastische Eigenschaften die Federeigenschaft der Spannzange 1 bestimmen. Die Gelenke 3 sind, wie aus Fig. 4 ersichtlich, als längliche Befestigungsstege ausgebildet, welche in radialer Ausrichtung (vgl. Fig. 2) zwischen jeweils zwei in Umfangsrichtung benachbarten Spannsegmenten 2 form- und kraftschlüssig eingesetzt werden. Die Befestigungsstege besitzen hierzu eine im Wesentlichen rechteckige Grundform mit axialen Einbuchtungen 5 auf. Volumen und Form definieren die Rückstellkraft der Gelenke 3 und damit die Elastizität der Spannzange 1 hinsichtlich radialer Auslenkbarkeit der Spannsegmente 2. Die Gelenke 3 weisen an ihren beiden axialen Stirnseiten jeweils zwei durch die mittige Einbuchtung 5 ausgebildete Vorsprünge 5a, 5b auf. Wie aus Fig. 1b und Fig. 2 ersichtlich, greifen die Vorsprünge 5a, 5b form- und/oder kraftschlüssig in entsprechende Ausnehmungen auf Seiten der Spannsegmente 2 ein, wodurch sich die Gelenke 3 an den Spannsegmenten 2 form- und /oder kraftschlüssig befestigt lassen.

In dem in Fig. 6 gezeigten Spannzustand treibt ein die Spannzange 1 zentral durchdringender, von einer Zugstange 6 angetriebener Spannkolben 12 die Spannsegmente 2 radial nach außen an, wodurch diese in den Hohlschaft des Hohlschaftkegels HSK ausgelenkt werden und die am Ringbund 7 als eine keilförmige Ringfläche 8 ausgebildete radiale Erhöhung gegen die Ringschulter 9 im Hohlschaft des Hohlschaftkegels gepresst wird. Neben der durch den Spannkolben 12 erzeugten Antriebskraft erfahren die Spannsegmente 2 durch die Gelenke 3 eine in Richtung Lösezustand wirkende Rückstellkraft. In der in Fig. 7 gezeigten Lösestellung drückt eine Zugstange 6 den Spannkolben 12 aus der in Fig. 6 gezeigten Stellung entlang der Drehachse nach links. Gleichzeitig drückt ein vom Spannkolben 12 mitgenommener Druckkolben 10 von in Fig. 7 von rechts (11) in der Weise radial von innen auf den hinteren Endabschnitt der Spannsegmente (2), dass diese ein Kippmoment (Fremdkraft) aus der in Fig. 6 gezeigten Spannstellung nach innen in den in Fig. 7 gezeigten Lösezustand erfahren, wodurch die kraftschlüssige Verbindung zwischen dem Hohlschaftkegel HSK (Werkzeugträger) und der Werkzeugmaschinenspindel WSP gelöst wird.

## Patentansprüche

1. Spannzange zur Erzeugung einer Anpresskraft zwischen zwei miteinander zu kuppelnden, drehangetriebenen Teilen, wie z. B. einer Werkzeuggrundaufnahme und einer werkzeugmaschinenseitig vorgesehenen Aufnahme, mit einer Vielzahl von rotationssymmetrisch um eine Drehachse angeordneten, gelenkig miteinander verbundenen Spannsegmenten (2), wobei jeweils zwei in Umfangsrichtung benachbart angeordnete Spannsegmente (2) über ein elastisches Gelenk (3) miteinander verbunden sind, **dadurch gekennzeichnet, dass** die Gelenke (3) jeweils als ein länglicher Befestigungssteg ausgebildet sind und in radialer Ausrichtung zwischen zwei in Umfangsrichtung benachbarten Spannsegmenten (2) form- und/oder kraftschlüssig eingesetzt sind.

2. Spannzange nach Anspruch 1, **dadurch gekennzeichnet, dass** die Spannsegmente (2) durch die Gelenke (3) radial auslenkbar miteinander verbunden sind.

3. Spannzange nach Anspruch 1 oder 2, **dadurch gekennzeichnet, dass** die Gelenke (3) zwischen den Spannsegmenten (2) in einem hinteren Endabschnitt der Spannzange (1) äquidistant angeordnet sind.

4. Spannzange nach einem der Ansprüche 1 bis 3, **dadurch gekennzeichnet, dass** die Gelenke (3) aus Kunststoff bestehen.

5. Spannzange nach einem der Ansprüche 1 bis 4, **dadurch gekennzeichnet, dass** die Befestigungsstege jeweils einen im Wesentlichen rechteckigen Querschnitt besitzen, der an seinen beiden axialen Stirnseiten jeweils zwei durch eine mittige Einbuchtung (5) ausgebildete Vorsprünge (5a, 5b) aufweist, die form- und/oder kraftschlüssig in entsprechende Ausnehmungen auf Seiten der Spannsegmente (2) eingreifen

## Claims

1. Collet chuck for producing a pressing force between two rotationally driven parts which are to be coupled together, such as for example of a tool base receiver and of a receiver provided on the machine tool side, comprising a plurality of clamping segments (2) connected together in an articulated manner and arranged rotationally symmetrically about a rotational axis, in each case two clamping segments (2) arranged adjacent to one another in the peripheral direction being connected together via a resilient articulation (3), **characterised in that** the articulations (3) are configured in each case as an elongate fastening web and are inserted positively and/or non-positively in radial alignment between two clamping segments (2) adjacent to one another in the peripheral direction.

2. Collet chuck according to Claim 1, **characterised in that** the clamping segments (2) are connected together in a manner in which they may be radially deflected by the articulations (3).

3. Collet chuck according to Claim 1 or 2, **characterised in that** the articulations (3) are arranged equidistant between the clamping segments (2) in a rear end portion of the collet chuck (1).

4. Collet chuck according to one of Claims 1 to 3, **characterised in that** the articulations (3) consist of plastics material.

5. Collet chuck according to one of Claims 1 to 4, **characterised in that** the fastening webs in each case have a substantially rectangular cross section, which on both its axial front faces in each case has two projections (5a, 5b) formed by a central depression (5), and which engage positively and/or non-positively in corresponding recesses on the sides of the clamping segments (2).

## Revendications

1. Pince de serrage pour créer une force de pression entre deux pièces devant être accouplées, entraînées en rotation, telles que par exemple un logement de base pour outils et un logement prévu côté machine-outil, avec une pluralité d'éléments de serrage (2), disposés de façon symétrique en rotation autour d'un axe de rotation, reliés entre eux de façon articulée, chaque fois deux segments de serrage (2) disposés en étant voisins dans le sens périphérique étant reliés entre eux par l'intermédiaire d'une articulation élastique (3), **caractérisée en ce que** les articulations (3) sont conçues chacune sous la forme d'un listel de fixation allongé et sont insérées par complémentarité de forme et/ou de force en orientation radiale entre deux segments de serrage (2) voisins en direction périphérique.

2. Pince de serrage selon la revendication 1, **caractérisée en ce que** les segments de serrage (2) sont reliés les uns aux autres par les articulations (3) de façon à pouvoir pivoter en direction radiale.

3. Pince de serrage selon la revendication 1 ou 2, **caractérisée en ce que** les articulations (3) entre les segments de serrage (2) sont disposées de façon équidistante dans une section d'extrémité arrière de la pince de serrage (1).

4. Pince de serrage selon l'une quelconque des revendications 1 à 3, **caractérisée en ce que** les articulations (3) sont en matière plastique.

5. Pince de serrage selon l'une quelconque des revendications 1 à 4, **caractérisée en ce que** les listels de fixation présentent chacun une section transversale sensiblement rectangulaire, qui sur ses deux faces axiales comporte chaque fois deux saillies (5a, 5b) formées par un creux central (5), qui s'engagent par complémentarité de forme et/ou de force dans des évidements correspondants sur des côtés des segments de serrage (2).
